# EUROPEAN PATENT APPLICATION

(11) **EP 4 718 584 A1**
(43) Date of publication of application: **01.04.2026**
(21) Application number: 23939246.7
(22) Date of filing: 30.10.2023
(51) Int. Cl.: H01M 10/615, H02J 7/00

(54) **CHARGING AND DISCHARGING CIRCUIT AND METHOD, COMPUTING DEVICE, AND CONTROL APPARATUS THEREFOR**

(30) Priority: 29.05.2023 CN 202310618088
(71) Applicant: Contemporary Amperex Technology Co., Limited, Ningde, Fujian 352100 (CN)
(72) Inventor: WU, Kai, Ningde, Fujian 352100 (CN); HUANG, Xiaojian, Ningde, Fujian 352100 (CN); CHEN, Wei, Ningde, Fujian 352100 (CN); CHEN, Xing, Ningde, Fujian 352100 (CN); PAN, Xianxi, Ningde, Fujian 352100 (CN)
(74) Representative: Ziebig Hengelhaupt Intellectual Property Attorneys Patentanwaltskanzlei PartGmbB
(86) International application number: PCT/CN2023/127779
(87) International publication number: WO 2024/244275

(57) **Abstract**

Embodiments of the present application provide a charge-discharge circuit, a method, a computing device, and a storage medium thereof, where a regulation switch module is connected between a first energy storage element and a second switch module, utilizing an alternating current generated by a charge-discharge loop between a drive motor and a battery to achieve battery self-heating. The present application enables flexible adjustment of the charge-discharge loop between a power battery and an energy storage element. The present application particularly achieves battery heating in a dual-drive motor scenario, enabling flexible adjustment of the charge-discharge of dual-drive motors for battery self-heating solutions while reducing costs, to meet heating demands in various scenarios.

## Description

### CROSS-REFERENCE TO RELATED APPLICATIONS

The present application claims priority to Chinese Patent Application No. 202310618088.2, filed with the China National Intellectual Property Administration on May 29, 2023 and entitled "CHARGE-DISCHARGE CIRCUIT, METHOD, COMPUTING DEVICE, AND CONTROL APPARATUS", which is incorporated herein by reference in its entirety.

### TECHNICAL FIELD

The present application relates to the field of battery technology, and more particularly, to a charge-discharge circuit, a method, a computing device, and a storage medium.

### BACKGROUND

Due to advantages such as high energy density, rechargeable capability, safety, and environmental friendliness, power modules such as rechargeable batteries are widely applied in fields including new energy vehicles, consumer electronics, and energy storage systems. With the development of battery technology and the demands of different vehicles and usage scenarios, requirements for battery self-heating performance have become increasingly diverse.

In scenarios involving dual-drive motors, battery self-heating solutions are singular and costly. How to flexibly adjust the charge-discharge of power modules and adapt battery self-heating solutions under various scenario demands is an urgent problem to be solved. The above statements are provided solely to offer background technical information related to the present application and do not necessarily constitute prior art.

### SUMMARY

Embodiments of the present application provide a charge-discharge circuit, a method, a computing device, and a storage medium, utilizing alternating current generated by a charge-discharge loop between a drive motor and a battery to achieve battery self-heating. The present application enables flexible adjustment of the charge-discharge loop between a power battery and an energy storage element without altering the original motor structure. The present application particularly achieves battery heating in a dual-drive motor scenario, enabling flexible adjustment of the charge-discharge of dual-drive motors for battery self-heating solutions while reducing costs, to meet heating demands in various scenarios.

Specifically, by controlling the on-off state of different phase bridge arms of a switch module, the impedance required for heating can be controlled and adjusted to achieve the maximum battery heating current. By leading out a motor neutral point, not only are modification points for dual-motor heating reduced, but also the heating impedance parameters are made adjustable, enhancing the system adaptability of the motor and improving the battery heating rate.

According to a first aspect, the present application provides a charge-discharge circuit including a power module, a first heating module, a second heating module, and a regulation switch module. The first heating module includes a first energy storage element and a first switch module connected to each other. The second heating module includes a second energy storage element and a second switch module connected to each other. The first switch module and the second switch module are both connected to the power module. The regulation switch module is connected between the first energy storage element and the second switch module.

In the charge-discharge circuit provided by embodiments of the present application, the first heating module and the second heating module can correspond to two groups of drive motors. By using the regulation switch module, the first energy storage element in one group of motors is connected to the second switch module in another group of motors, enabling flexible adjustment of the charge-discharge loop between the power battery and the energy storage element in a dual-drive motor scenario to achieve battery self-heating for dual motors. By adjusting the first switch module and the second switch module in the two groups of motors, the charge-discharge of the power module is flexibly adjusted, thereby flexibly adapting the self-heating method of the power battery to meet heating demands in various scenarios. This approach reduces costs and enables flexible adjustment of the charge-discharge of dual-drive motors for battery self-heating solutions to meet heating demands in various scenarios.

In some embodiments, the first energy storage element includes a motor winding, and the regulation switch module is connected between a neutral point of the motor winding and the second switch module.

In the charge-discharge circuit provided by embodiments of the present application, during the charge-discharge heating process, the neutral point of the motor winding of the first energy storage element is connected to the second switch module of another group of motors, achieving battery self-heating for dual motors in a dual-drive motor scenario. By adjusting the switch modules in the two groups of motors, the charge-discharge impedance of the power module is flexibly adjusted, thereby adjusting the peak current of the charge-discharge loop and improving the heating rate. This enables flexible adaptation of the self-heating method of the power battery to meet heating demands in various scenarios. While reducing costs, it allows flexible adjustment of the charge-discharge of dual-drive motors for battery self-heating solutions to meet heating demands in various scenarios.

In some embodiments, the second switch module includes a bridge arm group, and the regulation switch module is connected between the first energy storage element and a connection point between an upper bridge arm and a lower bridge arm of any phase bridge arm in the bridge arm group.

In the charge-discharge circuit provided by embodiments of the present application, the first switch module and the second switch module correspond to motor controllers of two respective groups of motors. During the charge-discharge heating process, the neutral point of the motor winding of the first energy storage element is connected to any phase bridge arm in the bridge arm group of the second switch module. Through one phase bridge arm of the first switch module and the second switch module, energy storage and energy supply are performed during the charge-discharge process, improving the charge-discharge efficiency between the power module and the power module, and achieving self-heating of the power module. By controlling the on-off state of different phase bridge arms of the switch modules, the impedance required for heating can be controlled and adjusted to achieve the maximum battery heating current. By leading out only one motor neutral point, not only are modification points for dual-motor heating reduced, but also the heating impedance parameters are made adjustable, enhancing the system adaptability of the motor and improving the battery heating rate.

According to a second aspect, the present application provides a computing device including a control module and the charge-discharge circuit of the first aspect. The control module is connected to the first switch module, the second switch module, and the regulation switch module.

In the computing device provided by embodiments of the present application, through the control module and the regulation switch module of the charge-discharge circuit, the first energy storage element in one group of motors is connected to the second switch module in another group of motors, achieving battery self-heating for dual motors in a dual-drive motor scenario. By adjusting the switch modules in the two groups of motors, the charge-discharge of the power module is flexibly adjusted, thereby flexibly adapting the self-heating method of the power battery to meet heating demands in various scenarios. This approach reduces costs and enables flexible adjustment of the charge-discharge of dual-drive motors for battery self-heating solutions to meet heating demands in various scenarios.

According to a third aspect, the present application provides a charge-discharge method applied to the computing device of the second aspect, including: under a condition that a heating condition is satisfied, controlling the regulation switch module to turn on; and controlling the power module, the first heating module, and the second heating module to form a battery charge-discharge loop for performing charge-discharge.

In the charge-discharge method provided by embodiments of the present application, the regulation switch module is controlled to turn on based on a battery heating instruction, enabling flexible adjustment of the charge-discharge loop between the power battery and the energy storage element in a dual-drive motor scenario without altering the circuit structure, achieving battery self-heating for dual motors. By adjusting the first switch module and the second switch module in the two groups of motors, the charge-discharge of the power module is flexibly adjusted, thereby flexibly adapting the self-heating method of the power battery to meet heating demands in various scenarios. This approach reduces costs and enables flexible adjustment of the charge-discharge of dual-drive motors for battery self-heating solutions to meet heating demands in various scenarios.

In some embodiments, the controlling the power module, the first heating module, and the second heating module to form a battery charge-discharge loop for performing charge-discharge includes: controlling the power module and the first energy storage element to form a first battery charge-discharge loop for performing charge-discharge, or controlling the power module, the first energy storage element, and the second energy storage element to form a second battery charge-discharge loop for performing charge-discharge.

In the charge-discharge method provided by embodiments of the present application, specifically by controlling the power module and the first energy storage element to form a first battery charge-discharge loop for performing charge-discharge, or controlling the power module, the first energy storage element, and the second energy storage element to form a second battery charge-discharge loop for performing charge-discharge, flexible adaptation of the self-heating method of the power battery is achieved to meet heating demands in various scenarios. This approach reduces costs and enables flexible adjustment of the charge-discharge of dual-drive motors for battery self-heating solutions to meet heating demands in various scenarios.

In some embodiments, the controlling the power module, the first heating module, and the second heating module to form a battery charge-discharge loop for performing charge-discharge includes: acquiring parameters of the power module; and determining, based on the parameters, the number of motor windings of the first energy storage element and/or the second energy storage element in the battery charge-discharge loop.

In the charge-discharge method provided by embodiments of the present application, different heating demand scenarios are determined based on the acquired parameters of the power module, thereby matching corresponding heating modes. By selecting the most suitable heating solution based on the state of the power module, the flexibility of charge-discharge adjustment and scenario adaptability are improved. This approach reduces costs and enables flexible adjustment of the charge-discharge of dual-drive motors for battery self-heating solutions to meet heating demands in various scenarios.

In some embodiments, the controlling the power module and the first energy storage element to form a first battery charge-discharge loop for performing charge-discharge includes: controlling a corresponding number of bridge arms in the first switch module to turn on, and controlling a corresponding number of motor windings in the first energy storage element to turn on; and adjusting the power module and the first energy storage element to form the first battery charge-discharge loop for performing charge-discharge.

In the charge-discharge method provided by embodiments of the present application, when performing heating control through a single motor inductance, flexible adjustment of the charge-discharge of dual-drive motors for battery self-heating solutions is achieved by flexibly adjusting the connection of different numbers of inductances in the single motor, to meet heating demands in various scenarios.

In some embodiments, the controlling the power module and the first energy storage element to form a first battery charge-discharge loop for performing charge-discharge includes: in a first period, controlling the power module to charge the first energy storage element; in a second period, controlling the first energy storage element to perform freewheeling; and in a third period, controlling the first energy storage element to charge the power module; where control of the first period, the second period, and the third period is alternately performed continuously.

In the embodiments provided by the present application, when adjusting the charge-discharge between the power module and the first energy storage element, the power module is first controlled to charge the first energy storage element, then the first energy storage element is controlled to perform freewheeling to buffer the current between the charge-discharge loops and stabilize the voltage of the energy storage element, and finally the first energy storage element is controlled to charge the power module. By alternately switching the charge-discharge between the power module and the first energy storage element, self-heating of the power module is achieved. During the self-heating process of the power module, continuous self-heating is achieved through alternate control of the first period, the second period, and the third period.

In some embodiments, the first switch module includes a first bridge arm group, the second switch module includes a second bridge arm group, the first energy storage element includes a motor winding, the regulation switch module is connected between a neutral point of the motor winding and a connection point between an upper bridge arm and a lower bridge arm of any phase bridge arm in the second bridge arm group, and the bridge arm in the second bridge arm group connected to the regulation switch module is a target bridge arm; where the controlling the power module and the first energy storage element to form a first battery charge-discharge loop for performing charge-discharge includes: in a first period, controlling an upper bridge arm of any phase in the first bridge arm group to turn on, and controlling a lower bridge arm of the target bridge arm in the second bridge arm group to turn on; in a second period, controlling the lower bridge arm of the target bridge arm to turn off; and in a third period, controlling the turned-on upper bridge arm in the first bridge arm group to turn off, and controlling a lower bridge arm corresponding to the turned-off bridge arm to turn on; where control of the first period, the second period, and the third period is alternately performed continuously.

In the charge-discharge method provided by embodiments of the present application, when adjusting the charge-discharge between the power module and the first energy storage element, by specifically controlling the turning on and turning off of different bridge arm groups of the first switch module and the second switch module, alternate switching of the charge-discharge between the power module and the first energy storage element is achieved, realizing self-heating of the power module. During the self-heating process of the power module, continuous self-heating is achieved through alternate control of the first period, the second period, and the third period.

In some embodiments, the first switch module includes the first bridge arm group, and the second switch module includes the second bridge arm group; the first energy storage element includes the motor winding, and the regulation switch module is connected between the neutral point of the motor winding and a connection point between an upper bridge arm and a lower bridge arm of any phase bridge arm in the second bridge arm group, and the bridge arm in the second bridge arm group connected to the regulation switch module is a target bridge arm; where the controlling the power module and the first energy storage element to form a first battery charge-discharge loop for performing charge-discharge includes: in a first period, controlling a lower bridge arm of any phase in the first bridge arm group to turn on, and controlling an upper bridge arm of the target bridge arm in the second bridge arm group to turn on; in a second period, controlling the upper bridge arm of the target bridge arm to turn off; and in a third period, controlling the turned-on lower bridge arm in the first bridge arm group to turn off, and controlling an upper bridge arm corresponding to the turned-off bridge arm to turn on; where control of the first period, the second period, and the third period is alternately performed continuously.

In the charge-discharge method provided by embodiments of the present application, when adjusting the charge-discharge between the power module and the first energy storage element, by specifically controlling the turning on and turning off of different bridge arm groups of the first switch module and the second switch module, alternate switching of the charge-discharge between the power module and the first energy storage element is achieved, realizing self-heating of the power module. During the self-heating process of the power module, continuous self-heating is achieved through alternate control of the first period, the second period, and the third period.

In some embodiments, the controlling the power module, the first energy storage element, and the second energy storage element to form a second battery charge-discharge loop for performing charge-discharge includes: controlling a corresponding number of bridge arms in the first switch module and a corresponding number of motor windings in the first energy storage element to turn on; controlling a corresponding number of bridge arms in the second switch module and a corresponding number of motor windings in the second energy storage element to turn on; and adjusting the power module, the first energy storage element, and the second energy storage element to form the second battery charge-discharge loop for performing charge-discharge.

In the charge-discharge method provided by embodiments of the present application, when performing heating control through dual motor inductances, flexible adjustment of the charge-discharge of dual-drive motors for battery self-heating solutions is achieved by flexibly adjusting the connection of different numbers of inductances in the dual motors, to meet heating demands in various scenarios.

In some embodiments, the controlling the power module, the first energy storage element, and the second energy storage element to form a second battery charge-discharge loop for performing charge-discharge includes: in a first period, controlling the power module to charge the first energy storage element and the second energy storage element; in a second period, controlling the first energy storage element and the second energy storage element to perform freewheeling; and in a third period, controlling the first energy storage element and the second energy storage element to charge the power module; where control of the first period, the second period, and the third period is alternately performed continuously.

In the embodiments provided by the present application, when adjusting the charge-discharge between the power module, the first energy storage element, and the second energy storage element, the power module is first controlled to charge the first energy storage element and the second energy storage element, then the first energy storage element and the second energy storage element are controlled to perform freewheeling to buffer the current between the charge-discharge loops and stabilize the voltage of the energy storage elements, and finally the first energy storage element and the second energy storage element are controlled to charge the power module. By alternately switching the charge-discharge between the power module and the first energy storage element, self-heating of the power module is achieved. During the self-heating process of the power module, continuous self-heating is achieved through alternate control of the first period, the second period, and the third period.

In some embodiments, the first switch module includes a first bridge arm group, and the second switch module includes a second bridge arm group; the first energy storage element includes a motor winding, the regulation switch module is connected between a neutral point of the motor winding and a connection point between an upper bridge arm and a lower bridge arm of any phase bridge arm in the second bridge arm group, and the bridge arm in the second bridge arm group connected to the regulation switch module is a target bridge arm; where the controlling the power module, the first energy storage element, and the second energy storage element to form a second battery charge-discharge loop for performing charge-discharge includes: in a first period, controlling an upper bridge arm of any phase in the first bridge arm group to turn on, and controlling a lower bridge arm of at least one phase bridge arm among remaining bridge arms excluding the target bridge arm in the second bridge arm group to turn on; in a second period, controlling the turned-on bridge arm in the second bridge arm group to turn off; and in a third period, controlling the turned-on upper bridge arm in the first bridge arm group to turn off, and controlling a lower bridge arm corresponding to the turned-off bridge arm to turn on; where control of the first period, the second period, and the third period is alternately performed continuously.

In the charge-discharge method provided by embodiments of the present application, when adjusting the charge-discharge between the power module, the first energy storage element, and the second energy storage element, by specifically controlling the turning on and turning off of different bridge arm groups of the first switch module and the second switch module, alternate switching of the charge-discharge between the power module, the first energy storage element, and the second energy storage element is achieved, realizing self-heating of the power module. During the self-heating process of the power module, continuous self-heating is achieved through alternate control of the first period, the second period, and the third period.

In some embodiments, the first switch module includes the first bridge arm group, the second switch module includes the second bridge arm group, the first energy storage element includes the motor winding, the regulation switch module is connected between the neutral point of the motor winding and a connection point between an upper bridge arm and a lower bridge arm of any phase bridge arm in the second bridge arm group, and the bridge arm in the second bridge arm group connected to the regulation switch module is the target bridge arm; where the controlling the power module, the first energy storage element, and the second energy storage element to form a second battery charge-discharge loop for performing charge-discharge includes: in a first period, controlling a lower bridge arm of any phase in the first bridge arm group to turn on, and controlling an upper bridge arm of at least one phase bridge arm among remaining bridge arms excluding the target bridge arm in the second bridge arm group to turn on; in a second period, controlling the turned-on bridge arm in the second bridge arm group to turn off; and in a third period, controlling the turned-on lower bridge arm in the first bridge arm group to turn off, and controlling an upper bridge arm corresponding to the turned-off bridge arm to turn on; where control of the first period, the second period, and the third period is alternately performed continuously.

In the charge-discharge method provided by embodiments of the present application, when adjusting the charge-discharge between the power module, the first energy storage element, and the second energy storage element, by specifically controlling the turning on and turning off of different bridge arm groups of the first switch module and the second switch module, alternate switching of the charge-discharge between the power module, the first energy storage element, and the second energy storage element is achieved, realizing self-heating of the power module. During the self-heating process of the power module, continuous self-heating is achieved through alternate control of the first period, the second period, and the third period.

In some embodiments, the controlling the power module, the first energy storage element, and the second energy storage element to form a second battery charge-discharge loop for performing charge-discharge includes: in a first period, controlling the power module to charge the first energy storage element; in a second period, controlling the first energy storage element and the second energy storage element to perform freewheeling; and in a third period, controlling the first energy storage element and the second energy storage element to charge the power module; where control of the first period, the second period, and the third period is alternately performed continuously.

In the charge-discharge method provided by embodiments of the present application, when adjusting the charge-discharge between the power module, the first energy storage element, and the second energy storage element, the power module is first controlled to charge the first energy storage element, then the first energy storage element and the second energy storage element are controlled to perform freewheeling to buffer the current between the charge-discharge loops and stabilize the voltage of the energy storage elements, and finally the first energy storage element and the second energy storage element are controlled to charge the power module. By alternately switching the charge-discharge between the power module and the first energy storage element, self-heating of the power module is achieved. During the self-heating process of the power module, continuous self-heating is achieved through alternate control of the first period, the second period, and the third period.

In some embodiments, the first switch module includes the first bridge arm group, the second switch module includes the second bridge arm group, the first energy storage element includes the motor winding, the regulation switch module is connected between the neutral point of the motor winding and a connection point between an upper bridge arm and a lower bridge arm of any phase bridge arm in the second bridge arm group, and the bridge arm in the second bridge arm group connected to the regulation switch module is a target bridge arm; where the controlling the power module, the first energy storage element, and the second energy storage element to form a second battery charge-discharge loop for performing charge-discharge includes: in a first period, controlling an upper bridge arm of any phase in the first bridge arm group to turn on, and controlling a lower bridge arm of the target bridge arm in the second bridge arm group to turn on; in a second period, controlling the lower bridge arm of the target bridge arm to turn off, and controlling an upper bridge arm of at least one phase among bridge arms excluding the target bridge arm in the second bridge arm group to turn on; and in a third period, controlling the turned-on upper bridge arm in the first bridge arm group to turn off, and controlling a lower bridge arm corresponding to the turned-off bridge arm to turn on; where control of the first period, the second period, and the third period is alternately performed continuously.

In the charge-discharge method provided by embodiments of the present application, when adjusting the charge-discharge between the power module, the first energy storage element, and the second energy storage element, by specifically controlling the turning on and turning off of different bridge arm groups of the first switch module and the second switch module, alternate switching of the charge-discharge between the power module, the first energy storage element, and the second energy storage element is achieved, realizing self-heating of the power module. During the self-heating process of the power module, continuous self-heating is achieved through alternate control of the first period, the second period, and the third period.

In some embodiments, the first switch module includes the first bridge arm group, the second switch module includes the second bridge arm group, the first energy storage element includes the motor winding, the regulation switch module is connected between the neutral point of the motor winding and a connection point between an upper bridge arm and a lower bridge arm of any phase bridge arm in the second bridge arm group, and the bridge arm in the second bridge arm group connected to the regulation switch module is a target bridge arm; where the controlling the power module, the first energy storage element, and the second energy storage element to form a second battery charge-discharge loop for performing charge-discharge includes: in a first period, controlling a lower bridge arm of any phase in the first bridge arm group to turn on, and controlling an upper bridge arm of the target bridge arm in the second bridge arm group to turn on; in a second period, controlling the upper bridge arm of the target bridge arm to turn off, and controlling a lower bridge arm of at least one phase among bridge arms excluding the target bridge arm in the second bridge arm group to turn on; and in a third period, controlling the turned-on lower bridge arm in the first bridge arm group to turn off, and controlling an upper bridge arm corresponding to the turned-off bridge arm to turn on; where control of the first period, the second period, and the third period is alternately performed continuously.

In the charge-discharge method provided by embodiments of the present application, when adjusting the charge-discharge between the power module, the first energy storage element, and the second energy storage element, by specifically controlling the turning on and turning off of different bridge arm groups of the first switch module and the second switch module, alternate switching of the charge-discharge between the power module, the first energy storage element, and the second energy storage element is achieved, realizing self-heating of the power module. During the self-heating process of the power module, continuous self-heating is achieved through alternate control of the first period, the second period, and the third period.

According to a fourth aspect, the present application provides a computing device including: a memory configured to store executable instructions; and a processor configured to connect to the memory to execute the executable instructions to perform the charge-discharge method of any one of the third aspect.

In the power module voltage regulation device provided by embodiments of the present application, through the regulation switch module, the first energy storage element in one group of motors is connected to the second switch module in another group of motors, achieving battery self-heating for dual motors in a dual-drive motor scenario. By adjusting the switch modules in the two groups of motors, the charge-discharge of the power module is flexibly adjusted, thereby flexibly adapting the self-heating method of the power battery to meet heating demands in various scenarios. This approach reduces costs and enables flexible adjustment of the charge-discharge of dual-drive motors for battery self-heating solutions to meet heating demands in various scenarios.

According to a fifth aspect, the present application provides a computer-readable storage medium having a computer program stored thereon; and the computer program is executed by a processor to implement the charge-discharge method of any one of the third aspect.

In the computer-readable storage medium provided by embodiments of the present application, through the regulation switch module, the first energy storage element in one group of motors is connected to the second switch module in another group of motors, achieving battery self-heating for dual motors in a dual-drive motor scenario. By adjusting the switch modules in the two groups of motors, the charge-discharge of the power module is flexibly adjusted, thereby flexibly adapting the self-heating method of the power battery to meet heating demands in various scenarios. This approach reduces costs and enables flexible adjustment of the charge-discharge of dual-drive motors for battery self-heating solutions to meet heating demands in various scenarios.

### BRIEF DESCRIPTION OF DRAWINGS

To more clearly illustrate the technical solutions of the embodiments of the present application, the drawings required for use in the embodiments of the present application are briefly introduced below. It is apparent that the drawings described below are merely some embodiments of the present application, and for those of ordinary skill in the art, other drawings can be obtained based on these drawings without creative effort.
FIG. 1 is a modular schematic diagram of a charge-discharge circuit according to one or more embodiments.
FIG. 2 is a circuit schematic diagram of a charge-discharge circuit 100 according to one or more embodiments.
FIG. 3 is a structural schematic diagram of a computing device 200 according to one or more embodiments.
FIG. 4 is a step schematic diagram of a charge-discharge method according to one or more embodiments.
FIG. 5 is a battery discharge schematic diagram of charge-discharge between a power module and a first energy storage element in a charge-discharge method according to one or more embodiments.
FIG. 6 is a motor freewheeling schematic diagram of charge-discharge between a power module and a first energy storage element in a charge-discharge method according to one or more embodiments.
FIG. 7 is a battery charging schematic diagram of charge-discharge between a power module and a first energy storage element in a charge-discharge method according to one or more embodiments.
FIG. 8 is a battery discharge schematic diagram of case one of charge-discharge between a power module, a first energy storage element, and a second energy storage element in a charge-discharge method according to one or more embodiments.
FIG. 9 is a motor freewheeling schematic diagram of case one of charge-discharge between a power module, a first energy storage element, and a second energy storage element in a charge-discharge method according to one or more embodiments.
FIG. 10 is a battery charging schematic diagram of case one of charge-discharge between a power module, a first energy storage element, and a second energy storage element in a charge-discharge method according to one or more embodiments.
FIG. 11 is a battery discharge schematic diagram of case two of charge-discharge between a power module, a first energy storage element, and a second energy storage element in a charge-discharge method according to one or more embodiments.
FIG. 12 is a motor freewheeling schematic diagram of case two of charge-discharge between a power module, a first energy storage element, and a second energy storage element in a charge-discharge method according to one or more embodiments.
FIG. 13 is a battery charging schematic diagram of case two of charge-discharge between a power module, a first energy storage element, and a second energy storage element in a charge-discharge method according to one or more embodiments.
FIG. 14 is a structural schematic diagram of another computing device according to one or more embodiments.

In the drawings, the drawings are not drawn to actual scale.

### DESCRIPTION OF EMBODIMENTS

The embodiments of the present application are described in further detail below with reference to the drawings and examples. The detailed descriptions and drawings of the following examples are used to illustratively explain the principles of the present application, but cannot be used to limit the scope of the present application, that is, the present application is not limited to the described embodiments.

In the description of the present application, unless otherwise specified, the term "multiple" means at least two; and the orientations or positional relationships indicated by the terms "upper", "lower", "left", "right", "inside", "outside", and similar terms are merely for ease and brevity of description of the present application rather than indicating or implying that the apparatuses or components mentioned must have specific orientations or must be constructed or operated according to particular orientations. These terms shall therefore not be construed as limitations on the present application. In addition, the terms "first", "second", "third", and similar terms are merely for the purpose of description and shall not be understood as any indication or implication of relative importance. The term "vertical" does not mean strictly vertical, but is within an allowable range of error. The term "parallel" is not strictly parallel, but is within an allowable range of error.

The orientation terms appearing in the following description are all directions shown in the figures and do not limit the specific structure of the present application. In the description of the present application, it should also be noted that, unless otherwise expressly specified and limited, the terms "installed", "connected", and "connection" should be understood in a broad sense, for example, as a physical connection, an electrical connection, or an integral connection; or as an indirect connection through an intermediate medium. For those of ordinary skill in the art, the specific meanings of the above terms in the present application can be understood based on specific circumstances.

With the development of battery technology, various performance aspects of power modules are continuously improving, particularly in battery self-heating. However, current battery self-heating solutions are singular and applicable to limited scenarios. How to flexibly adjust the charge-discharge of power modules and adapt battery self-heating solutions under various scenarios is an urgent problem to be solved.

In addition, for battery self-heating solutions in dual-drive motor scenarios, typical heating solutions are singular and costly. Moreover, the impedance parameters during the battery heating process cannot be adjusted. For high-voltage systems, the battery heating process is prone to large peak currents, making it impossible to further adjust and increase the heating current, thus failing to improve the heating rate. These issues are prominent in the market, reducing customer satisfaction.

In view of this, embodiments of the present application provide a charge-discharge circuit, a method, a computing device, and a storage medium, where a neutral point of any one group of motors is led out and connected, via a switch connector, namely the regulation switch module in the present application, to any one phase bridge arm of the controller of another group of motors, namely the switch module. By utilizing the alternating current generated by the charge-discharge loop between the drive motor and the battery, battery self-heating is achieved. The present application enables flexible adjustment of the charge-discharge loop between the power battery and the energy storage element without altering the motor structure. The present application particularly achieves battery heating in a dual-drive motor scenario, reducing costs and enabling flexible adjustment of the charge-discharge of dual-drive motors for battery self-heating solutions to meet heating demands in various scenarios.

Specifically, in embodiments of the present application, the first heating module and the second heating module can correspond to two groups of drive motors. By controlling the on-off state of different phase bridge arms of the switch modules of the motors, the impedance required for heating is controlled and adjusted to achieve the maximum battery heating current. By leading out a motor neutral point, not only are modification points for dual-motor heating reduced, but also the heating impedance parameters are made adjustable, enhancing the system adaptability of the motor and improving the battery heating rate.

The power module in embodiments of the present application can include, but is not limited to, a lithium-ion battery, a lithium metal battery, a lead-acid battery, a nickel-cadmium battery, a nickel-metal hydride battery, a lithium-sulfur battery, a lithium-air battery, or a sodium-ion battery. In terms of scale, the battery in embodiments of the present application can be a single cell, a battery module, or a battery pack. In terms of application scenarios, the battery can be used in motorized apparatuses such as automobiles and ships. For example, the battery can be used in a motorized vehicle to power a motor of the motorized vehicle as a traction source for the electric vehicle. The battery can also power other electric components in the electric vehicle, for example, powering a vehicular air conditioner, a vehicular player, and similar devices.

For ease of description, the following will take the application of the power module in new energy vehicles (motorized vehicles) as an example for elaboration.

A drive motor and its control system are a core part of a new energy vehicle, with its drive characteristics determining the main performance indicators of the vehicle in driving. The motor drive system of a new energy vehicle mainly consists of an electric motor (namely, the motor), a power converter, a motor controller (for example, an inverter), various detection sensors, and a power source. The motor is a rotating electromagnetic machine operating based on the principle of electromagnetic induction, used to convert electrical energy into mechanical energy. During operation, the motor takes electric power from an electric system and outputs mechanical power to a mechanical system.

Optionally, the electric apparatus and the computing device include, but are not limited to, vehicles, ships, or spacecraft.

Typically, the impedance parameters of battery heating control strategies cannot be adjusted during the battery heating process. For high-voltage systems, the battery heating process is prone to large peak currents, making it impossible to further adjust and increase the heating current, thus failing to improve the heating rate and flexibly meet heating demands in various scenarios. These issues are prominent in the market, reducing customer satisfaction. In contrast, the present application provides a charge-discharge circuit, a method, a computing device, and a storage medium, where by controlling the on-off state of different phase bridge arms of the switch modules, the impedance required for heating can be controlled and adjusted to achieve the maximum battery heating current. By leading out a motor neutral point, not only are modification points for dual-motor heating reduced, but also the heating impedance parameters are made adjustable, enhancing the system adaptability of the motor and improving the battery heating rate.

In principle, some embodiments of the present application lead out a neutral line of one group of motors to connect to the controller of another group of motors, namely the switch module. By controlling the conduction timing of the switch tubes in the bridge arm groups of the two motor controllers, the battery stores energy using the dual electric drive system during the external discharge process, generating an oscillating current across the battery bus, causing the battery to produce heat. The magnitude of the oscillating current generated at the battery bus can be adjusted by combining the impedances of the two motors, that is, by involving combinations of any phase bridge arms in the switch modules of the two motors in the charge-discharge loop, determining different heating modes under different voltage platforms, and adjusting the impedance of the two motors through combinations of any phase bridge arms in the switch modules of the two motors, reducing the peak current of the electric drive system and thereby increasing the oscillating current generated across the battery.

Some embodiments of the charge-discharge circuit, method, computing device, and storage medium of the present application can also be based on a single motor heating control method, reusing the second motor drive system to achieve a battery self-heating technology with an adjustable temperature rise rate at a lower cost.

The following describes the charge-discharge circuit and its charge-discharge principle of the present application as a whole to facilitate a better understanding of the charge-discharge scheme under dual-drive motors of the present application.

The neutral line of one group of motor windings is led out and connected to any one group of bridge arms in the controller of another group of motors. The magnitude and phase difference of the current flowing into the neutral line winding are controlled to remain consistent. Unlike the driving mode where the motor windings need to pass symmetrical alternating current to generate a rotating magnetic field to drive the motor, the present application, for forming a first battery charge-discharge loop or a second battery charge-discharge loop, can control one phase winding of the neutral line motor to pass current. If two or three phase windings of the neutral phase motor are controlled to pass current, the magnitude and phase difference of the current flowing into each phase winding must be consistent, ensuring that the motor does not produce torque.

Through the motor neutral line, a loop is formed with another electric drive system and the battery terminal, where the neutral line current can be controlled not to flow through the second motor winding based on impedance requirements, only returning to the battery through the second motor controller. If the peak current flowing through the motor controller switch is too large, the second motor controller can be controlled to introduce any two or three phase windings of the second motor to adjust the system heating impedance, reducing the peak current.

The method of generating oscillating heating current at the battery bus mainly includes:
during the battery discharge phase, an upper bridge arm or a lower bridge arm of any phase of the first group of motors is turned on, the relay connected to the motor neutral line remains conducting with the second group of motors, and a lower bridge arm or an upper bridge arm of any phase of the second group of motors is turned on, at which point the battery discharges to the two motor systems;
during the motor freewheeling phase, the turned-on lower bridge arm in the second group of motor controllers is turned off, and freewheeling is achieved through the freewheeling tube of the upper bridge arm, realizing internal freewheeling of the two motor systems; alternatively, while turning off all lower bridge arms of the second group of motor controllers, the upper bridge arm of the current phase bridge arm is turned on, realizing internal freewheeling of the two motor systems, enhancing the stability of the motor voltage; and
during the battery charging phase, a lower bridge arm or an upper bridge arm of any phase of the first group of motors is turned on, realizing the recharging of the energy of the motor to the battery.

Ultimately, by introducing the motor neutral line into the second motor controller, the heating current inductance can be adjusted based on system requirements, reducing the bus peak current and improving heating efficiency.

To make the technical solutions and advantages of the embodiments of the present application clearer, exemplary embodiments of the present application are described in further detail below with reference to the drawings. It is apparent that the described embodiments are only a part of the embodiments of the present application, not an exhaustive list of all embodiments. It should be noted that, in the absence of conflict, the embodiments and features in the embodiments of the present application can be combined with each other.

For ease of understanding and description, in terms of functional principles, the first heating module and the second heating module in embodiments of the present application can correspond to two groups of drive motors, the first energy storage element and the second energy storage element can correspond to their respective motor windings, and the first switch module and the second switch module can correspond to their respective motor controllers.

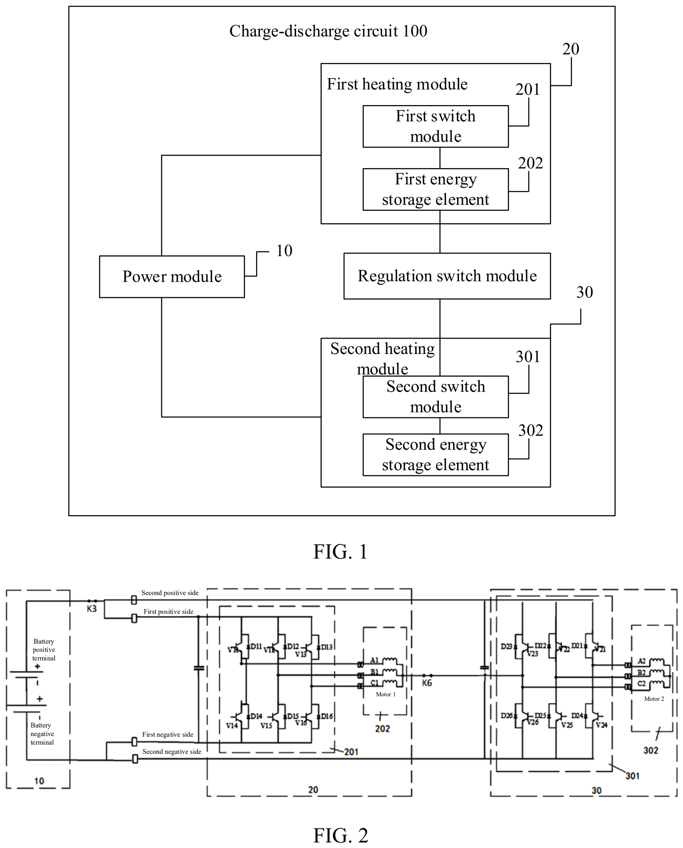

FIG. 1 is a modular schematic diagram of a charge-discharge circuit provided by an embodiment of the present application. FIG. 2 is a circuit schematic diagram of a charge-discharge circuit 100 provided by an embodiment of the present application.

As shown in FIG. 1, the charge-discharge circuit provided by the present application includes a power module 10, a first heating module 20, a second heating module 30, and a regulation switch module. The first heating module 20 and the second heating module 20 are both connected to the power module 10. The first heating module 20 includes a first energy storage element 202 and a first switch module 201. The second heating module 20 includes a second energy storage element 302 and a second switch module 301. The first switch module 201 and the second switch module 301 are both connected to the power module 10. The regulation switch module is connected between the first energy storage element 202 and the second switch module 301.

In the charge-discharge circuit provided by embodiments of the present application, the first heating module 20 and the second heating module 20 can correspond to two groups of drive motors. By using the regulation switch module, the first energy storage element 202 in one group of motors is connected to the second switch module 301 in another group of motors, enabling flexible adjustment of the charge-discharge loop between the power battery and the energy storage element in a dual-drive motor scenario to achieve battery self-heating for dual motors. By adjusting the first switch module 201 and the second switch module 301 in the two groups of motors, the charge-discharge of the power module 10 is flexibly adjusted, thereby flexibly adapting the self-heating method of the power battery to meet heating demands in various scenarios. This approach reduces costs and enables flexible adjustment of the charge-discharge of dual-drive motors for battery self-heating solutions to meet heating demands in various scenarios.

In some embodiments, the first energy storage element 202 includes a motor winding, and the regulation switch module is connected between a neutral point of the motor winding and the second switch module 301.

In the charge-discharge circuit provided by embodiments of the present application, during the charge-discharge heating process, the neutral point of the motor winding of the first energy storage element 202 is connected to the second switch module 301 of another group of motors, achieving battery self-heating for dual motors in a dual-drive motor scenario. By adjusting the switch modules in the two groups of motors, the charge-discharge impedance of the power module 10 is flexibly adjusted, thereby adjusting the peak current of the charge-discharge loop and improving the heating rate. This enables flexible adaptation of the self-heating method of the power battery to meet heating demands in various scenarios. While reducing costs, it allows flexible adjustment of the charge-discharge of dual-drive motors for battery self-heating solutions to meet heating demands in various scenarios.

In some embodiments, the second switch module 301 includes a bridge arm group, and the regulation switch module is connected between the first energy storage element 202 and a connection point between an upper bridge arm and a lower bridge arm of any phase bridge arm in the bridge arm group.

In the charge-discharge circuit provided by embodiments of the present application, the first switch module 201 and the second switch module 301 correspond to motor controllers of two respective groups of motors. During the charge-discharge heating process, the neutral point of the motor winding of the first energy storage element 202 is connected to any phase bridge arm in the bridge arm group of the second switch module 301. Through one phase bridge arm of the first switch module 201 and the second switch module 301, energy storage and energy supply are performed during the charge-discharge process, improving the charge-discharge efficiency between the power module 10 and the power module 10, and achieving self-heating of the power module 10. By controlling the on-off state of different phase bridge arms of the switch modules, the impedance required for heating can be controlled and adjusted to achieve the maximum battery heating current. By leading out only one motor neutral point, not only are modification points for dual-motor heating reduced, but also the heating impedance parameters are made adjustable, enhancing the system adaptability of the motor and improving the battery heating rate.

As shown in FIG. 2, the regulation switch module K6 connects the first energy storage element 202 and the second switch module 301. The regulation switch module is configured to respond to a battery heating signal to turn on the first heating module 20 and the second heating module 30. The first switch module 201 and the second switch module 301 are configured to respond to a heating regulation signal to adjust the charge-discharge between the power module 10, the first energy storage element 202, and the second energy storage element 302.

As shown in FIG. 2, the first energy storage element 202 includes an M-phase motor, the first switch module 201 includes a first bridge arm group, and the second switch module 301 includes a second bridge arm group. The first bridge arm group and the second bridge arm group include M-phase bridge arms, where M is a positive integer. The M-phase windings of the M-phase motor are respectively connected in a one-to-one correspondence with the connection points between the upper bridge arm and the lower bridge arm of each phase bridge arm.

The common connection point of all upper bridge arms in the first switch module 201 serves as a first terminal connected to a first positive side of the power module 10, the common connection point of all lower bridge arms in the first switch module 201 serves as a second terminal connected to a first negative side of the power module 10, and the connection points between the upper bridge arm and the lower bridge arm of each phase bridge arm in the first switch module 201 are respectively connected to the first energy storage element 202, namely, to ends of all motor winding. The neutral point of the first energy storage element 202 is connected to one end of the regulation switch module.

The common connection point of all upper bridge arms in the second switch module 301 serves as a first terminal connected to a second positive side of the power module 10, the common connection point of all lower bridge arms in the second switch module 301 serves as a second terminal connected to a second negative side of the power module 10, and the connection points between the upper bridge arm and the lower bridge arm of each phase bridge arm in the second switch module 301 are respectively connected to the second energy storage element 302. The connection point between the upper bridge arm and the lower bridge arm of any one phase bridge arm in the second switch module 301 is connected to another end of the regulation switch module, and the bridge arm connected to the regulation switch module is a target bridge arm.

Specifically, the neutral point of the motor winding of the first energy storage element 202 is connected to one end of the regulation switch module, and another end of the regulation switch module is connected to the connection point between the upper bridge arm and the lower bridge arm of any phase bridge arm in the second bridge arm group.

Both ends of the first heating module 20 and the second heating module 30 are connected in parallel with a stabilizing capacitor, which buffers the current during charge-discharge switching, improving the stability and continuity of the motor voltage during the charge-discharge process. Additionally, the stabilizing capacitor can stabilize voltage and filter out noise.

For ease of explanation, the two groups of motors in embodiments of the present application are three-phase motors, and the magnitude of the current flowing through all windings of the motors is equal with the same phase. Thus, by ensuring the magnitude of the current through all windings of the motors is equal with the same phase, the control synchronicity and flexibility of the bridge arm switches in the bridge arm group are improved.

The bridge arm groups in the first switch module 201 and the second switch module 301 can be implemented by an inverter in the motor drive system, where the inverter can be realized using bridge arm switches of insulated gate bipolar transistors (Insulated Gate Bipolar Transistor, IGBT). The number of bridge arms in the bridge arm group is the same as the number of inductances in the motor. For example, if the motor is a three-phase motor, the inverter includes three-phase bridge arms. Each phase bridge arm in the three-phase bridge arms has an upper bridge arm and a lower bridge arm, each provided with a switch unit. As shown in FIG. 2, each upper and lower bridge arm includes a transistor and a freewheeling diode, with the transistor and the freewheeling diode connected in parallel. For example, one bridge arm in the bridge arm group includes an upper bridge arm switching transistor V11 and freewheeling diode D11, and a lower bridge arm switching transistor V14 and freewheeling diode D14, with other bridge arms following the same principle, as specifically shown in FIG. 2.

For an M-phase motor, it can include multiple inductances, and the magnitude of the current flowing through all windings of the M-phase motor is equal with the same phase. Taking a three-phase motor as an example, it can include three inductances, with one inductance corresponding to one bridge arm in the bridge arm group. One end of each inductance is respectively connected to the connection point between the upper bridge arm and the lower bridge arm in the bridge arm, and another end of each inductance is connected to a common connection point, with the common connection point being the three-phase neutral point of the motor.

It should be noted that the motor is not limited to a three-phase motor and may also be a six-phase motor, correspondingly, a six-phase motor may include six-phase bridge arms.

Based on this, through the power battery charge-discharge circuit provided by the present application, the power module 10 can be connected in series with an inverter to supply power for driving.

The circuit also includes three bridge arm groups of the inverter and a motor neutral connection line, with the motor including three-phase windings, which are original components of an electric vehicle.

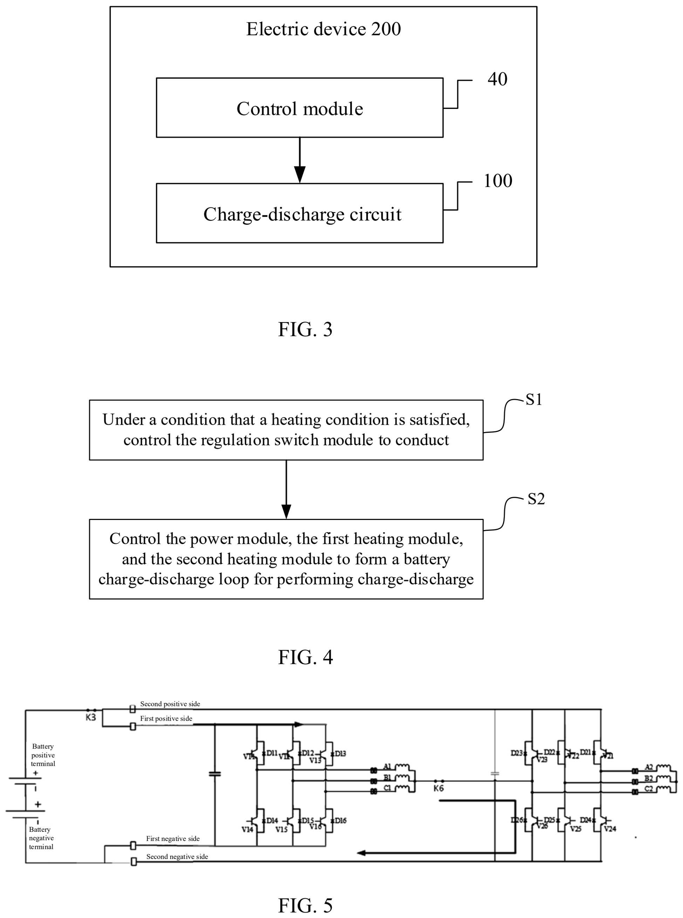

The descriptions of the various embodiments above tend to emphasize the differences between the embodiments, and their similarities or identical aspects can be referenced mutually. For brevity, they are not repeated herein. FIG. 3 is a schematic block diagram of an electric device 200 provided by an embodiment of the present application.

As shown in FIG. 3, an embodiment of the present application provides an electric device including a control module 40 and the charge-discharge circuit 100 of any one of the above embodiments. The control module 40 is connected to the first switch module 201, the second switch module 301, and the regulation switch module.

In the electric device provided by embodiments of the present application, through the control module and the regulation switch module of the charge-discharge circuit, the first energy storage element 202 in one group of motors is connected to the second switch module 301 in another group of motors, achieving battery self-heating for dual motors in a dual-drive motor scenario. By adjusting the switch modules in the two groups of motors, the charge-discharge of the power module 10 is flexibly adjusted, thereby flexibly adapting the self-heating method of the power battery to meet heating demands in various scenarios. This approach reduces costs and enables flexible adjustment of the charge-discharge of dual-drive motors for battery self-heating solutions to meet heating demands in various scenarios.

FIG. 4 is a schematic flowchart of a charge-discharge method provided by an embodiment of the present application.

As shown in FIG. 4, the charge-discharge method provided by an embodiment of the present application, applied to an electric device, includes:
S1. Under a condition that a heating condition is satisfied, control the regulation switch module to turn on.
S2. Control the power module, the first heating module, and the second heating module to form a battery charge-discharge loop for performing charge-discharge.

In the charge-discharge method provided by embodiments of the present application, the regulation switch module is controlled to turn on based on a battery heating instruction, enabling flexible adjustment of the charge-discharge loop between the power battery and the energy storage element in a dual-drive motor scenario without altering the circuit structure, achieving battery self-heating for dual motors. By adjusting the first switch module 201 and the second switch module 301 in the two groups of motors, the charge-discharge of the power module 10 is flexibly adjusted, thereby flexibly adapting the self-heating method of the power battery to meet heating demands in various scenarios. This approach reduces costs and enables flexible adjustment of the charge-discharge of dual-drive motors for battery self-heating solutions to meet heating demands in various scenarios.

Controlling the power module, the first heating module, and the second heating module to form a battery charge-discharge loop for performing charge-discharge includes: controlling the power module and the first energy storage element to form a first battery charge-discharge loop for performing charge-discharge, or controlling the power module, the first energy storage element, and the second energy storage element to form a second battery charge-discharge loop for performing charge-discharge.

In the charge-discharge method provided by embodiments of the present application, different heating demand scenarios are determined based on the acquired parameters of the power module 10, thereby matching the control of the power module and the first energy storage element to form a first battery charge-discharge loop for performing charge-discharge, or controlling the power module, the first energy storage element, and the second energy storage element to form a second battery charge-discharge loop for performing charge-discharge. By selecting the most suitable heating solution based on the state of the power module 10, the flexibility of charge-discharge adjustment and scenario adaptability are improved. This approach reduces costs and enables flexible adjustment of the charge-discharge of dual-drive motors for battery self-heating solutions to meet heating demands in various scenarios.

During specific implementation, a battery management system BMS collects the battery pack temperature, battery state of charge SOC, voltage, and current signals. The battery management system BMS then compares one or more parameters of the battery with set thresholds for analysis, determines whether the heating condition is satisfied, and, if satisfied, sends a corresponding heating request to a vehicle controller based on the battery state of charge SOC state.

The vehicle controller reads the current operating state of the motor.

If the motor is in a non-driving state, the vehicle controller sends a first control signal to the motor controller, controlling the regulation switch module K6 at the neutral line to close, and connecting the two groups of motors through the neutral line. The motor controller sends periodic heating drive signals to toggle the conduction state of the switches, achieving inverter control of the battery current for battery self-heating.

Specifically, the battery system voltage platform is determined based on the current battery state of charge, and the current operating state of the motor, including the motor inductance, is read. After comparative analysis, there are two battery states. Battery state one: if the inductance of one group of motors, for example, the first energy storage element 202, is sufficient to meet the heating demand of the current battery system voltage platform, a first battery charge-discharge loop is formed for performing charge-discharge, using the first energy storage element 202 for heating. Battery state two: if the inductance of one group of motors, for example, the first energy storage element 202, is insufficient to meet the heating demand of the current battery system voltage platform, a second battery charge-discharge loop is formed for performing charge-discharge, using the first energy storage element 202 and the second energy storage element 302 for heating.

Controlling the first switch module 201 and the second switch module 301 to adjust the power module 10, the first energy storage element 202, and the second energy storage element 302 to form a second battery charge-discharge loop for performing charge-discharge includes: controlling the first switch module 201 and the second switch module 301 to adjust the power module 10, the first energy storage element 202, and the second energy storage element 302 to form a second battery charge-discharge loop for performing charge-discharge.

In some embodiments, for battery state one: if the inductance of one group of motors, for example, the first energy storage element 202, is sufficient to meet the heating demand of the current battery system voltage platform, a first battery charge-discharge loop is formed for performing charge-discharge, using the first energy storage element 202 for heating.

In some embodiments, adjusting the power module and the first energy storage element 202 to form a first battery charge-discharge loop for performing charge-discharge includes: controlling a corresponding number of bridge arms in the first switch module 201 to turn on, and controlling a corresponding number of motor windings in the first energy storage element 202 to turn on; and adjusting the power module and the first energy storage element 202 to form a first battery charge-discharge loop for performing charge-discharge.

In the charge-discharge method provided by embodiments of the present application, when performing heating control through a single motor inductance, flexible adjustment of the charge-discharge of dual-drive motors for battery self-heating solutions is achieved by flexibly adjusting the connection of different numbers of inductances in the single motor, to meet heating demands in various scenarios.

Specifically, adjusting the charge-discharge between the power module 10 and the first energy storage element 202 includes: in a first period, controlling the power module 10 to charge the first energy storage element 202; in a second period, controlling the first energy storage element 202 to perform freewheeling; and in a third period, controlling the first energy storage element 202 to charge the power module 10; where control of the first period, the second period, and the third period is alternately performed continuously.

In the embodiments provided by the present application, when adjusting the charge-discharge between the power module 10 and the first energy storage element 202, the power module 10 is first controlled to charge the first energy storage element 202, then the first energy storage element 202 is controlled to perform freewheeling to buffer the current between the charge-discharge loops and stabilize the voltage of the energy storage element, and finally the first energy storage element 202 is controlled to charge the power module 10. By alternately switching the charge-discharge between the power module 10 and the first energy storage element 202, self-heating of the power module 10 is achieved. During the self-heating process of the power module 10, continuous self-heating is achieved through alternate control of the first period, the second period, and the third period.

In some embodiments, the first switch module 201 includes a first bridge arm group, and the second switch module 301 includes a second bridge arm group; the first energy storage element 202 includes a motor winding, and the regulation switch module is connected between a neutral point of the motor winding and a connection point between an upper bridge arm and a lower bridge arm of any phase bridge arm in the second bridge arm group, and the bridge arm in the second bridge arm group connected to the regulation switch module is a target bridge arm; where controlling the first switch module 201 and the second switch module 301 to adjust the charge-discharge between the power module 10 and the first energy storage element 202 includes: in a first period, controlling an upper bridge arm of any phase in the first bridge arm group to turn on, and controlling a lower bridge arm of the target bridge arm in the second bridge arm group to turn on; in a second period, controlling the lower bridge arm of the target bridge arm to turn off; and in a third period, controlling the turned-on upper bridge arm in the first bridge arm group to turn off, and controlling a lower bridge arm corresponding to the turned-off bridge arm to turn on; where control of the first period, the second period, and the third period is alternately performed continuously.

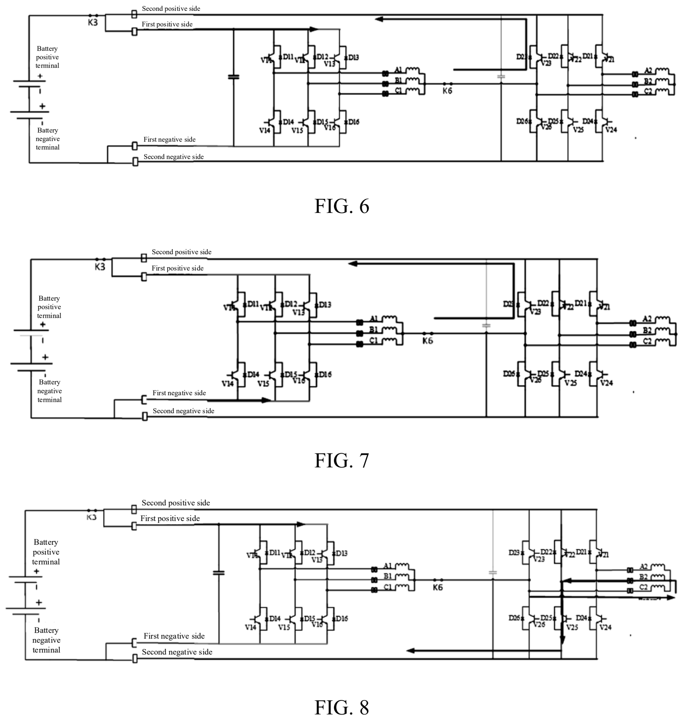

In this embodiment, the first energy storage element and the second energy storage element can correspond to their respective motor windings. For ease of description, the first energy storage element and the second energy storage element can correspond to a first motor and a second motor, respectively. The motor is an M-phase motor including M-phase inductance windings, and the magnitude of the current flowing through all windings of the M-phase motor is equal with the same phase. This embodiment takes a three-phase motor as an example, which can include three inductances, with one inductance corresponding to one bridge arm in the bridge arm group of the switch module. Based on this, when only one motor is connected for heating in battery state one, 1 to 3 inductances can be connected for heating. FIG. 5 is a battery charging schematic diagram of charge-discharge between the power module 10 and the first energy storage element 202 in a charge-discharge method provided by an embodiment of the present application. FIG. 6 is a motor freewheeling schematic diagram of charge-discharge between the power module 10 and the first energy storage element 202 in a charge-discharge method provided by an embodiment of the present application. FIG. 7 is a battery discharge schematic diagram of charge-discharge between the power module 10 and the first energy storage element 202 in a charge-discharge method provided by an embodiment of the present application.

For battery state one: if the inductance of one group of motors, for example, the first energy storage element 202, is sufficient to meet the heating demand of the current battery system voltage platform, a first battery charge-discharge loop is formed, using the first energy storage element 202 for heating. The specific implementation is described below. In the embodiment of the present application, the example where all inductances of the motor are connected to the loop is used for illustration.

First, a vehicle controller sends a heating control signal to a first motor controller and a second controller. If a domain controller is used, the vehicle controller sends the heating signal to the domain controller. This example uses two independent motor controllers.

As shown in FIG. 5, the first switch module 201 controls the upper bridge arms of any phase to turn on simultaneously. In this embodiment, the switching transistors V11, V12, and V13 of the three-phase upper bridge arms are simultaneously turned on. The second switch module 301 controls the switching transistor V26 of the lower bridge arm of a target bridge arm to turn on. At this point, the battery is in a battery discharge mode, with current flowing from the positive terminal of the battery, through the bridge arms of the first switch module 201 and the motor winding inductances of the first energy storage element 202, to the bridge arm of the second switch module 301, and back to the negative terminal of the battery. As shown in FIG. 5 for the current flow state, the specific battery discharge loop is: battery positive terminal → first positive side → V11, V12, and V13 → A1, B1, and C1 → V26 → second negative side → battery negative terminal.

As shown in FIG. 6, since the motor is an inductive component, when the lower bridge arm V26 of the second switch module 301 switches from on to off, the winding inductance energy is freewheeled through D23. Alternatively, the switching transistor V23 in the second switch module 301 can be controlled to turn on, at which point the motor is in an internal freewheeling state, and the battery interacts with a stabilizing capacitor for energy exchange. As shown in FIG. 6 for the current flow state, the freewheeling loop is: first positive side → V11, V12, and V13 → A1, B1, and C1 → V23/D23 → second positive side.

As shown in FIG. 7, when the heating request current frequency reaches a change moment, the first switch module 201 controls the upper bridge arm switching transistors V11, V12, and V13 to switch from on to off, and the winding inductance energy is freewheeled through freewheeling diodes D14, D15, and D16. The first switch module 201 can also control the switching transistors V14, V15, and V16 to turn on, at which point the motor is in a battery charging state. As shown in FIG. 7 for the current flow state, the charging loop is: battery negative terminal → first negative side → V14, V15, V16/D14, D15, and D16 → A1, B1, and C1 → V23/D23 → second positive side → battery positive terminal.

Finally, a battery management system BMS determines whether the battery pack temperature is abnormal. If abnormal, it sends temperature rise abnormality information to the vehicle controller, and the vehicle controller forwards the temperature rise abnormality information to the motor controller, stopping the heating.

In the charge-discharge method provided by embodiments of the present application, when adjusting the charge-discharge between the power module 10 and the first energy storage element 202, by specifically controlling the turning on and turning off of different bridge arm groups of the first switch module 201 and the second switch module 301, alternate switching of the charge-discharge between the power module 10 and the first energy storage element 202 is achieved, realizing self-heating of the power module 10. During the self-heating process of the power module 10, continuous self-heating is achieved through alternate control of the first period, the second period, and the third period.

Since the control generates a positive and negative alternating current across the battery bus, the specific heating control logic can also be performed with reversed steps. The battery current would then flow from the second positive side into the second group of motors, then to the first group of motors, and finally exit from the first negative side, starting the battery discharge and energy storage. The control involves simply inverting the switch tube control.

Therefore, in some extended embodiments, controlling the first switch module 201 and the second switch module 301 to adjust the power module 10 and the first energy storage element 202 to form a second battery charge-discharge loop for performing charge-discharge includes: in a first period, controlling a lower bridge arm of any phase in the first bridge arm group to turn on, and controlling an upper bridge arm of the target bridge arm in the second bridge arm group to turn on; in a second period, controlling the upper bridge arm of the target bridge arm to turn off; and in a third period, controlling the turned-on lower bridge arm in the first bridge arm group to turn off, and controlling an upper bridge arm corresponding to the turned-off bridge arm to turn on; where control of the first period, the second period, and the third period is alternately performed continuously. The current flow path diagram for this embodiment is not shown but can be referenced by reversing the path directions in FIGs. 5-7.

In the charge-discharge method provided by embodiments of the present application, when adjusting the charge-discharge between the power module 10 and the first energy storage element 202, by specifically controlling the turning on and turning off of different bridge arm groups of the first switch module 201 and the second switch module 301, alternate switching of the charge-discharge between the power module 10 and the first energy storage element 202 is achieved, realizing self-heating of the power module 10. During the self-heating process of the power module 10, continuous self-heating is achieved through alternate control of the first period, the second period, and the third period.

For battery state two: if the inductance of one group of motors, for example, the first energy storage element 202, is insufficient to meet the heating demand of the current battery system voltage platform, a second battery charge-discharge loop is formed for performing charge-discharge, using the first energy storage element 202 and the second energy storage element 302 for heating.

In some embodiments, controlling the first switch module 201 and the second switch module 301 to adjust the power module, the first energy storage element, and the second energy storage element to form a second battery charge-discharge loop for performing charge-discharge includes: controlling a corresponding number of bridge arms in the first switch module to turn on, and controlling a corresponding number of motor windings in the first energy storage element to turn on; controlling a corresponding number of bridge arms in the second switch module to turn on, and controlling a corresponding number of motor windings in the second energy storage element to turn on; and adjusting the power module, the first energy storage element, and the second energy storage element to form a second battery charge-discharge loop for performing charge-discharge.

In the charge-discharge method provided by embodiments of the present application, when performing heating control through dual motor inductances, flexible adjustment of the charge-discharge of dual-drive motors for battery self-heating solutions is achieved by flexibly adjusting the connection of different numbers of inductances in the dual motors, to meet heating demands in various scenarios.

Adjusting the power module 10, the first energy storage element 202, and the second energy storage element 302 to form a second battery charge-discharge loop for performing charge-discharge includes: in a first period, controlling the power module 10 to charge the first energy storage element 202 and the second energy storage element 302; in a second period, controlling the first energy storage element 202 and the second energy storage element 302 to perform freewheeling; and in a third period, controlling the first energy storage element 202 and the second energy storage element 302 to charge the power module 10; where control of the first period, the second period, and the third period is alternately performed continuously.

Therefore, when adjusting the charge-discharge between the power module 10, the first energy storage element 202, and the second energy storage element 302, the power module 10 is first controlled to charge the first energy storage element 202 and the second energy storage element 302, then the first energy storage element 202 and the second energy storage element 302 are controlled to perform freewheeling to buffer the current between the charge-discharge loops and stabilize the voltage of the energy storage elements, and finally the first energy storage element 202 and the second energy storage element 302 are controlled to charge the power module 10. By alternately switching the charge-discharge between the power module 10 and the first energy storage element 202, self-heating of the power module 10 is achieved. During the self-heating process of the power module 10, continuous self-heating is achieved through alternate control of the first period, the second period, and the third period.

Specifically, the first switch module 201 includes the first bridge arm group, and the second switch module 301 includes the second bridge arm group; the first energy storage element 202 includes a motor winding, and the regulation switch module is connected between a neutral point of the motor winding and a connection point between an upper bridge arm and a lower bridge arm of any phase bridge arm in the second bridge arm group, where the bridge arm in the second bridge arm group connected to the regulation switch module is a target bridge arm.

Correspondingly, controlling the first switch module 201 and the second switch module 301 to adjust the power module 10, the first energy storage element 202, and the second energy storage element 302 to form a second battery charge-discharge loop for performing charge-discharge includes: in a first period, controlling an upper bridge arm of any phase in the first bridge arm group to turn on, and controlling a lower bridge arm of at least one phase bridge arm among remaining bridge arms excluding the target bridge arm in the second bridge arm group to turn on; in a second period, controlling the turned-on bridge arm in the second bridge arm group to turn off; and in a third period, controlling the turned-on upper bridge arm in the first bridge arm group to turn off, and controlling a lower bridge arm corresponding to the turned-off bridge arm to turn on; where control of the first period, the second period, and the third period is alternately performed continuously.

For battery state two, the control of the number of phases of the motor windings in the second energy storage element 302 of the second switch module 301 participating in the charge-discharge can be further refined, mainly divided into the following two cases. For example, case one: if the voltage of the current battery system voltage platform is moderate, within a certain threshold range, where the impedance provided by all motor windings of the first energy storage element 202 is supplemented by the impedance provided by some motor windings of the second energy storage element 302, the heating demand can be satisfied. For another example, case two: if the voltage of the current battery system voltage platform is high, within a certain threshold range, where the impedance provided by all motor windings of the first energy storage element 202 is supplemented by the impedance provided by all motor windings of the second energy storage element 302, the heating demand can be satisfied.

In this embodiment, the first energy storage element and the second energy storage element can correspond to their respective motor windings. For ease of description, the first energy storage element and the second energy storage element can correspond to a first motor and a second motor, respectively. The motor is an M-phase motor including M-phase inductance windings, and the magnitude of the current flowing through all windings of the M-phase motor is equal with the same phase. This embodiment takes a three-phase motor as an example, which can include three inductances, with one inductance corresponding to one bridge arm in the bridge arm group of the switch module. Based on this, when only one motor is connected for heating in battery state one, 1 to 3 inductances can be connected for heating. When dual motors are connected for heating in battery state two, 3 to 6 inductances can be connected. When dual motors are operating, different numbers of inductances from each motor can be connected in various combinations, for example: 1 inductance from the first motor + 2 inductances from the second motor, 1 inductance from the first motor + 3 inductances from the second motor, 2 inductances from the first motor + 2 inductances from the second motor, 2 inductances from the first motor + 3 inductances from the second motor, or 3 inductances from the first motor + 3 inductances from the second motor. This enables flexible adjustment of the charge-discharge of dual-drive motors for battery self-heating solutions to meet heating demands in various scenarios.

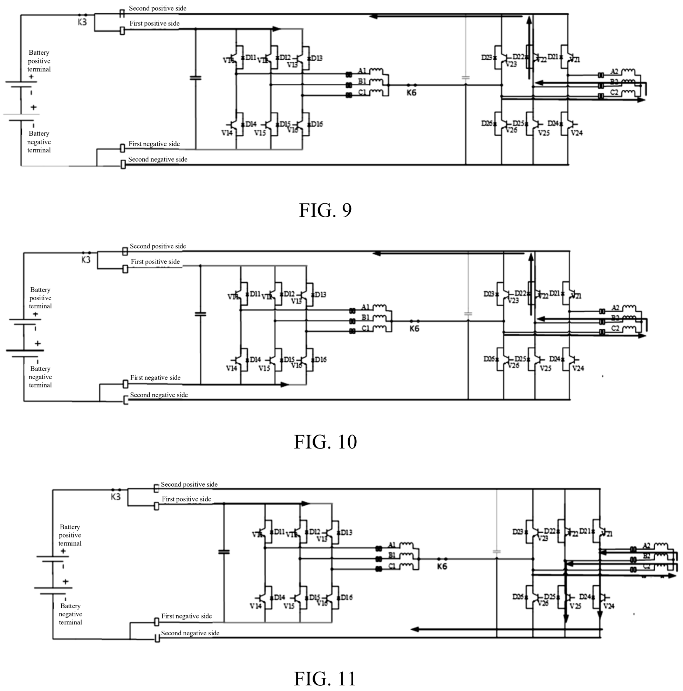

FIG. 8 is a battery discharge schematic diagram of charge-discharge between the power module 10, the first energy storage element 202, and the second energy storage element 302 in a charge-discharge method provided by an embodiment of the present application. FIG. 9 is a motor freewheeling schematic diagram of charge-discharge between the power module 10, the first energy storage element 202, and the second energy storage element 302 in a charge-discharge method provided by an embodiment of the present application. FIG. 10 is a battery charging schematic diagram of charge-discharge between the power module 10, the first energy storage element 202, and the second energy storage element 302 in a charge-discharge method provided by an embodiment of the present application.

For case one: if the voltage of the current battery system voltage platform is moderate, within a certain threshold range, where the impedance provided by all motor windings of the first energy storage element 202 is supplemented by the impedance provided by some motor windings of the second energy storage element 302, the heating demand can be satisfied. At this point, the inductance of the motor windings of the first energy storage element 202 is insufficient to meet the heating current demand, and two-phase inductances of the second energy storage element 302 can be connected in series into the system heating loop.

As shown in FIG. 8, first, the first switch module 201 controls the upper bridge arms of any phase to turn on simultaneously. In this embodiment, the switching transistors V11, V12, and V13 of the three-phase upper bridge arms are simultaneously turned on. The second switch module 301 controls the switching transistor V25 of a lower bridge arm of one phase excluding the target bridge arm to turn on, at which point the current flows through two-phase windings of the second group of motors, and the battery is in discharge mode. As shown in FIG. 8 for the current flow state, the discharge loop is: battery positive terminal → first positive side → V11, V12, and V13 → A1, B1, and C1 → C2 → B2 → V25 → second negative side → battery negative terminal.

As shown in FIG. 9, since the motor is an inductive component, when the lower bridge arm V25 of the second switch module 301 switches from turned on to off, the winding inductance energy is freewheeled through D22. Alternatively, the switching transistor V22 in the second switch module 301 can be controlled to turn on, at which point the motor is in an internal freewheeling state, and the battery interacts with a stabilizing capacitor for energy exchange. As shown in FIG. 9 for the current flow state, the freewheeling loop is: first positive side → V11, V12, and V13 → A1, B1, and C1 → C2 → B2 → V22/D22 → second positive side.

As shown in FIG. 10, when the heating request current frequency reaches a change moment, the first switch module 201 controls the upper bridge arm switching transistors V11, V12, and V13 to switch from turned on to off, and the winding inductance energy is freewheeled through freewheeling diodes D14, D15, and D16. The first switch module 201 can also control the switching transistors V14, V15, and V16 to turn on, at which point the motor is in a battery charging state. As shown in FIG. 10 for the current flow state, the charging loop is: battery negative terminal → first negative side → V14, V15, V16/D14, D15, and D16 → A1, B1, and C1 → C2 → B2 → V22/D22 → second positive side → battery positive terminal.

For case two: if the voltage of the current battery system voltage platform is high or moderately high, within a certain threshold range, where the impedance provided by all motor windings of the first energy storage element 202 is supplemented by the impedance provided by all motor windings of the second energy storage element 302, the heating demand can be satisfied.

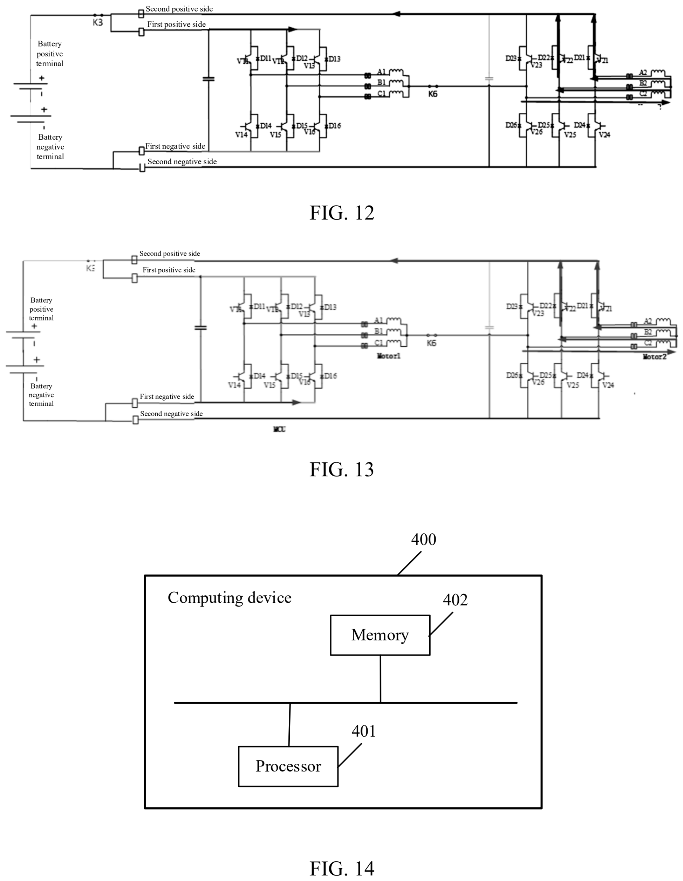

FIG. 11 is a battery discharge schematic diagram of case two of charge-discharge between the power module 10, the first energy storage element 202, and the second energy storage element 302 in a charge-discharge method provided by an embodiment of the present application. FIG. 12 is a motor freewheeling schematic diagram of case two of charge-discharge between the power module 10, the first energy storage element 202, and the second energy storage element 302 in a charge-discharge method provided by an embodiment of the present application. FIG. 13 is a battery charging schematic diagram of case two of charge-discharge between the power module 10, the first energy storage element 202, and the second energy storage element 302 in a charge-discharge method provided by an embodiment of the present application.

When the battery system voltage platform is high, the inductance of the first group of motors is insufficient to meet the heating current demand, and the three-phase inductances of the second group of motors can be combined in series and parallel before being connected in series into the heating loop.

As shown in FIG. 11, first, the first switch module 201 controls the upper bridge arms of any phase to turn on simultaneously. In this embodiment, the switching transistors V11, V12, and V13 of the three-phase upper bridge arms are simultaneously turned on. The second switch module 301 controls the switching transistors V24 and V25 of the lower bridge arms of two phases excluding the target bridge arm to turn on, at which point the current flows through the three-phase windings of the second group of motors, and the battery is in discharge mode. The discharge loop is: battery positive terminal → first positive side → V11, V12, and V13 → A1, B1, and C1 → C2 → B2 and A2 → V24 and V25 → second negative side → battery negative terminal.

As shown in FIG. 12, since the motor is an inductive component, when the lower bridge arms V24 and V25 of the second switch module 301 switch from turned on to off, the winding inductance energy is freewheeled through D21 and D22. Alternatively, the switching transistors V21 and V22 in the second switch module 301 can be controlled to turn on, at which point the motor is in an internal freewheeling state, and the battery interacts with a stabilizing capacitor for energy exchange. As shown in FIG. 12 for the current flow state, the freewheeling loop is: first positive side → V11, V12, and V13 → A1, B1, and C1 → C2 → B2 and A2 → V21, V22/D21, and D22 → second positive side.

As shown in FIG. 13, when the heating request current frequency reaches a change moment, the first switch module 201 controls the upper bridge arm switching transistors V11, V12, and V13 to switch from turned on to off, and the winding inductance energy is freewheeled through freewheeling diodes D14, D15, and D16. The first switch module 201 can also control the switching transistors V14, V15, and V16 to turn on, at which point the motor is in a battery charging state. As shown in FIG. 10 for the current flow state, the charging loop is: battery negative terminal → first negative side → V14, V15, V16/D14, D15, and D16 → A1, B1, and C1 → C2 → B2, A2 → V21, V22/D21, and D22 → second positive side → battery positive terminal.

In summary, in the charge-discharge method provided by embodiments of the present application, when adjusting the charge-discharge between the power module 10, the first energy storage element 202, and the second energy storage element 302, by specifically controlling the turning on and turning off of different bridge arm groups of the first switch module 201 and the second switch module 301, alternate switching of the charge-discharge between the power module 10, the first energy storage element 202, and the second energy storage element 302 is achieved, realizing self-heating of the power module 10. During the self-heating process of the power module 10, continuous self-heating is achieved through alternate control of the first period, the second period, and the third period.

Since the control generates a positive and negative alternating current across the battery bus, the specific heating control logic can also be performed with reversed steps. The battery current would then flow from the second positive side into the second group of motors, then to the first group of motors, and finally exit from the first negative side, starting the battery discharge and energy storage. The control involves simply inverting the switch tube control.

Therefore, in some extended embodiments, controlling the first switch module 201 and the second switch module 301 to adjust the power module 10, the first energy storage element 202, and the second energy storage element 302 to form a second battery charge-discharge loop for performing charge-discharge includes: in a first period, controlling a lower bridge arm of any phase in the first bridge arm group to turn on, and controlling an upper bridge arm of at least one phase bridge arm among remaining bridge arms excluding the target bridge arm in the second bridge arm group to turn on; in a second period, controlling the turned-on bridge arm in the second bridge arm group to turn off; and in a third period, controlling the turned-on lower bridge arm in the first bridge arm group to turn off, and controlling an upper bridge arm corresponding to the turned-off bridge arm to turn on; where control of the first period, the second period, and the third period is alternately performed continuously. The current flow path diagram for this embodiment is not shown but can be referenced by reversing the path directions in FIGs. 8-10 or FIGs. 11-13.

In the charge-discharge method provided by embodiments of the present application, when adjusting the charge-discharge between the power module 10, the first energy storage element 202, and the second energy storage element 302, by specifically controlling the turning on and turning off of different bridge arm groups of the first switch module 201 and the second switch module 301, alternate switching of the charge-discharge between the power module 10, the first energy storage element 202, and the second energy storage element 302 is achieved, realizing self-heating of the power module 10. During the self-heating process of the power module 10, continuous self-heating is achieved through alternate control of the first period, the second period, and the third period.

Further, the above battery discharge process can control any phase lower bridge arm of the second switch module to turn on; during the motor freewheeling phase and the battery charging heating phase, any phase upper bridge arm of the second switch module can be controlled to turn on, where the turned-on phase of the lower bridge arm during the battery discharge process does not need to correspond one-to-one with the turned-on phase of the upper bridge arm during battery charging. For example, during the battery discharge phase, V25 of the second motor controller can be selected to turn on, and during the motor freewheeling and battery charging phases, V21 of the motor controller is controlled to turn on; alternatively, during the battery discharge phase, V25 and V26 of the second motor controller can be selected to turn on, and during the motor freewheeling and battery charging phases, V22 and V21 of the motor controller are controlled to turn on.

The descriptions of the various embodiments above tend to emphasize the differences between the embodiments, and their similarities or identical aspects can be referenced mutually. For brevity, they are not repeated herein.

For battery state two, in addition to the two cases above, adjustments can be made flexibly based on the battery voltage platform. For example, case three, during battery discharge, only the first energy storage element 202 is connected in the loop, while during freewheeling and battery charging, both the first energy storage element 202 and the second energy storage element 302 are connected in the loop.

Specifically, adjusting the power module 10, the first energy storage element 202, and the second energy storage element 302 to form a second battery charge-discharge loop for performing charge-discharge includes: in a first period, controlling the power module 10 to charge the first energy storage element 202; in a second period, controlling the first energy storage element 202 and the second energy storage element 302 to perform freewheeling; and in a third period, controlling the first energy storage element 202 and the second energy storage element 302 to charge the power module 10; where control of the first period, the second period, and the third period is alternately performed continuously.

In the charge-discharge method provided by embodiments of the present application, when adjusting the charge-discharge between the power module 10, the first energy storage element 202, and the second energy storage element 302, the power module 10 is first controlled to charge the first energy storage element 202, then the first energy storage element 202 and the second energy storage element 302 are controlled to perform freewheeling to buffer the current between the charge-discharge loops and stabilize the voltage of the energy storage elements, and finally the first energy storage element 202 and the second energy storage element 302 are controlled to charge the power module 10. By alternately switching the charge-discharge between the power module 10 and the first energy storage element 202, self-heating of the power module 10 is achieved. During the self-heating process of the power module 10, continuous self-heating is achieved through alternate control of the first period, the second period, and the third period.

Further, controlling the first switch module 201 and the second switch module 301 to adjust the power module 10, the first energy storage element 202, and the second energy storage element 302 to form a second battery charge-discharge loop for performing charge-discharge includes: in a first period, controlling an upper bridge arm of any phase in the first bridge arm group to turn on, and controlling a lower bridge arm of a target bridge arm in the second bridge arm group to turn on; in a second period, controlling the lower bridge arm of the target bridge arm to turn off, and controlling an upper bridge arm of at least one phase among bridge arms excluding the target bridge arm in the second bridge arm group to turn on; and in a third period, controlling the turned on upper bridge arm in the first bridge arm group to turn off, and controlling a lower bridge arm corresponding to the turned-off bridge arm to turn on; where control of the first period, the second period, and the third period is alternately performed continuously.

As shown in FIG. 5, first, the switching transistors V11, V12, and V13 are turned on; the second switch module 301 controls the switching transistor V26 of the lower bridge arm of the target bridge arm to turn on. At this point, the battery is in a discharge mode, with current flowing from the positive terminal of the battery, through the bridge arms of the first switch module 201 and the motor winding inductances of the first energy storage element 202, to the bridge arm of the second switch module 301, and back to the negative terminal of the battery. As shown in FIG. 5 for the current flow state, the specific battery discharge loop is: battery positive terminal → first positive side → V11, V12, and V13 → A1, B1, and C1 → V26 → second negative side → battery negative terminal.

As shown in FIG. 9, since the motor is an inductive component, when the lower bridge arm V25 of the second switch module 301 switches from turned on to off, the winding inductance energy is freewheeled through D22. Alternatively, the switching transistor V22 in the second switch module 301 is controlled to turn on, at which point the motor is in an internal freewheeling state, and the battery interacts with a stabilizing capacitor for energy exchange. As shown in FIG. 9 for the current flow state, the freewheeling loop is: first positive side → V11, V12, and V13 → A1, B1, and C1 → C2 → B2 → V22/D22 → second positive side.

As shown in FIG. 10, when the heating request current frequency reaches a change moment, the first switch module 201 controls the upper bridge arm switching transistors V11, V12, and V13 to switch from turned on to off, and the winding inductance energy is freewheeled through freewheeling diodes D14, D15, and D16. The first switch module 201 also controls switching transistors V14, V15, and V16 to turn on, at which point the motor is in a battery charging state. As shown in FIG. 10 for the current flow state, the charging loop is: battery negative terminal → first negative side → V14, V15, V16/D14, D15, and D16 → A1, B1, and C1 → C2 → B2 → V22/D22 → second positive side → battery positive terminal.

In the charge-discharge method provided by embodiments of the present application, when adjusting the charge-discharge between the power module 10, the first energy storage element 202, and the second energy storage element 302, by specifically controlling the turning on and turning off of different bridge arm groups of the first switch module 201 and the second switch module 301, alternate switching of the charge-discharge between the power module 10, the first energy storage element 202, and the second energy storage element 302 is achieved, realizing self-heating of the power module 10. During the self-heating process of the power module 10, continuous self-heating is achieved through alternate control of the first period, the second period, and the third period.

Since the control generates a positive and negative alternating current across the battery bus, the specific heating control logic can also be performed with reversed steps. The battery current will then flow from the second positive side into the second group of motors, then to the first group of motors, and finally exit from the first negative side, starting the battery discharge and energy storage. The control involves simply inverting the switch tube control.

Therefore, in some extended embodiments, controlling the first switch module 201 and the second switch module 301 to adjust the power module 10, the first energy storage element 202, and the second energy storage element 302 to form a second battery charge-discharge loop for performing charge-discharge includes: in a first period, controlling a lower bridge arm of any phase in the first bridge arm group to turn on, and controlling an upper bridge arm of the target bridge arm in the second bridge arm group to turn on; in a second period, controlling the upper bridge arm of the target bridge arm to turn off, and controlling a lower bridge arm of at least one phase among bridge arms excluding the target bridge arm in the second bridge arm group to turn on; and in a third period, controlling the turned-on lower bridge arm in the first bridge arm group to turn off, and controlling an upper bridge arm corresponding to the turned-off bridge arm to turn on; where control of the first period, the second period, and the third period is alternately performed continuously. The current flow path diagram for this embodiment is not shown but can be referenced by reversing the path directions in FIGs. 5-7, FIGs. 8-10, or FIGs. 11-13.

In the charge-discharge method provided by embodiments of the present application, when adjusting the charge-discharge between the power module 10, the first energy storage element 202, and the second energy storage element 302, by specifically controlling the turning on and turning off of different bridge arm groups of the first switch module 201 and the second switch module 301, alternate switching of the charge-discharge between the power module 10, the first energy storage element 202, and the second energy storage element 302 is achieved, realizing self-heating of the power module 10. During the self-heating process of the power module 10, continuous self-heating is achieved through alternate control of the first period, the second period, and the third period.

The descriptions of the various embodiments above tend to emphasize the differences between the embodiments, and their similarities or identical aspects can be referenced mutually. For brevity, they are not repeated herein.

FIG. 14 shows a structural schematic diagram of a computing device 400 according to an embodiment of the present application.

As shown in FIG. 14, the computing device 400 includes: a memory 402 configured to store executable instructions; and a processor 401 configured to connect to the memory 402 to execute the executable instructions to perform a motion vector prediction method.

Those skilled in the art can understand that the schematic diagram in FIG. 14 is merely an example of the computing device 400 and does not constitute a limitation on the power module computing device 400. The computing device 400 can include more or fewer components than shown, or combine certain components, or have different components. For example, the power module voltage regulation device 400 can also include input/output devices, network access devices, buses, and similar components.

The processor 401, referred to as a Central Processing Unit (central processing unit, CPU), can also be other general-purpose processors, a digital signal processor (Digital Signal Processor, DSP), an application specific integrated circuit (Application Specific Integrated Circuit, ASIC), a Field-Programmable Gate Array (field-programmable gate array, FPGA), or other programmable logic devices, discrete gate or transistor logic devices, discrete hardware components, and similar devices. The general-purpose processor can be a microprocessor, or the processor 401 can be any conventional processor. The processor 401 is the control center of the computing device 400, connecting various parts of the entire power module voltage regulation device 400 using various interfaces and lines.

The memory 402 can be used to store computer-readable instructions. The processor 401 implements various functions of the power module computing device 400 by running or executing computer-readable instructions or modules stored in the memory 402 and invoking data stored in the memory 402. The memory 402 can mainly include a program storage area and a data storage area, where the program storage area can store an operating system, applications required for at least one function (such as sound playback function, image playback function, and similar functions), and similar data; the data storage area can store data created based on the use of the power module computing device 400 and similar data. Additionally, the memory 402 can include a hard disk, internal memory, a plug-in hard disk, a smart media card (Smart Media Card, SMC), a secure digital (Secure Digital, SD) card, a flash card (Flash Card), at least one disk storage device, a flash memory device, a read-Only memory (Read-Only Memory, ROM), a random access memory (Random Access Memory, RAM), or other nonvolatile/volatile storage devices.

If the modules integrated in the power module computing device 400 are implemented in the form of software function modules and sold or used as independent products, they can be stored in a computer-readable storage medium. Based on this understanding, all or part of the processes in the methods of the above embodiments of the present invention can also be completed by instructing related hardware through computer-readable instructions. The computer-readable instructions can be stored in a computer-readable storage medium, and when executed by a processor, the computer-readable instructions can implement the steps of the various method embodiments described above.

In the power module 10 voltage regulation device provided by embodiments of the present application, by controlling the regulation switch module 30 to connect a first power battery 101 and a second power battery 102 in series or parallel, and simultaneously controlling the switch module to adjust the charge-discharge between the power module 10 and an energy storage element 21, flexible adjustment of the charge-discharge of the power module 10 is achieved in various scenarios, flexibly adapting the self-heating method of the battery. When the battery temperature or battery state of charge is less than a set temperature, a high-frequency current heating mode is adopted; when the battery temperature or battery state of charge is greater than the set temperature, a low-frequency current heating mode is adopted.

Finally, the present application also provides a computer-readable storage medium having a computer program stored thereon; the computer program is executed by a processor to implement a power battery charge-discharge method.

Those of ordinary skill in the art can realize that the units and algorithm steps of the examples described in connection with the embodiments disclosed herein can be implemented by electronic hardware or a combination of computer software and electronic hardware. Whether the functions are executed by hardware or software depends on particular applications and design constraints of the technical solutions. Persons skilled in the art can employ a different method to implement the described functions for each particular application, but such implementations shall not be construed as going beyond the scope of the present application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the apparatus embodiments described above are merely illustrative. For example, the division of the units is merely a logical function division, and in actual implementation, there can be other division methods, such as multiple units or components can be combined or integrated into another system, or some features can be ignored or not executed. In addition, the displayed or discussed mutual couplings, direct couplings, or communication connections may be indirect couplings or communication connections through some interfaces, apparatuses, or units, and may be in electrical, mechanical, or other forms.

The units described as separate components may or may not be physically separate, and the components displayed as units may or may not be physical units, that is, they can be located in one place or distributed across multiple network units. Some or all of the units may be selected depending on actual requirements to achieve the objectives of the solutions of the embodiments.

In addition, function units in the embodiments of the present application may be integrated into one processing unit, or each of the units may exist alone physically, or two or more units may be integrated into one unit.

If the functions are implemented in the form of software function units and sold or used as independent products, they can be stored in a computer-readable storage medium. Based on such an understanding, the technical solutions of the present application substantially, or the parts making contributions to the prior art, or part of the technical solutions may be embodied in the form of a software product, and the computer software product is stored in a storage medium, including a plurality of instructions configured to enable a computer device (which may be a personal computer, a server, a network device, or similar devices) to execute all or part of the steps of the method in each embodiment of the present application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of the present application, but are not intended to limit the protection scope of the present application. Any variation or replacement readily figured out by persons skilled in the art within the technical scope disclosed in the present application shall fall within the protection scope of the present application. Therefore, the protection scope of the present application shall be subject to the protection scope of the claims.

## Claims

1. A charge-discharge circuit, comprising a power module, a first heating module, a second heating module, and a regulation switch module; wherein
the first heating module comprises a first energy storage element and a first switch module connected to each other;
the second heating module comprises a second energy storage element and a second switch module connected to each other; and
the first switch module and the second switch module are both connected to the power module; and the regulation switch module is connected between the first energy storage element and the second switch module.

2. The charge-discharge circuit according to claim 1, wherein the first energy storage element comprises a motor winding, and the regulation switch module is connected between a neutral point of the motor winding and the second switch module.

3. The charge-discharge circuit according to claim 1 or 2, wherein the second switch module comprises a bridge arm group; and the regulation switch module is connected between the first energy storage element and a connection point between an upper bridge arm and a lower bridge arm of any phase bridge arm in the bridge arm group.

4. An electric device, comprising a control module and the charge-discharge circuit according to any one of claims 1 to 3; wherein
the control module is connected to the first switch module, the second switch module, and the regulation switch module.

5. A charge-discharge control method, applied to the computing device according to claim 4, comprising:
under a condition that a heating condition is satisfied, controlling the regulation switch module to turn on; and
controlling the power module, the first heating module, and the second heating module to form a battery charge-discharge loop for performing charge-discharge.

6. The method according to claim 5, wherein the controlling the power module, the first heating module, and the second heating module to form a battery charge-discharge loop for performing charge-discharge comprises:
controlling the power module and the first energy storage element to form a first battery charge-discharge loop for performing charge-discharge; or
controlling the power module, the first energy storage element, and the second energy storage element to form a second battery charge-discharge loop for performing charge-discharge.

7. The method according to claim 5 or 6, wherein the controlling the power module, the first heating module, and the second heating module to form a battery charge-discharge loop for performing charge-discharge comprises:
acquiring parameters of the power module; and
determining, based on the parameters, the number of motor windings of the first energy storage element and/or the second energy storage element in the battery charge-discharge loop.

8. The method according to claim 6 or 7, wherein the controlling the power module and the first energy storage element to form a first battery charge-discharge loop for performing charge-discharge comprises:
controlling a corresponding number of bridge arms in the first switch module to turn on, and controlling a corresponding number of motor windings in the first energy storage element to turn on; and
adjusting the power module and the first energy storage element to form the first battery charge-discharge loop for performing charge-discharge.

9. The method according to any one of claims 6 to 8, wherein the controlling the power module and the first energy storage element to form a first battery charge-discharge loop for performing charge-discharge comprises:
in a first period, controlling the power module to charge the first energy storage element;
in a second period, controlling the first energy storage element to perform freewheeling; and
in a third period, controlling the first energy storage element to charge the power module;
wherein control of the first period, the second period, and the third period is alternately performed continuously.

10. The method according to any one of claims 6 to 9, wherein the first switch module comprises a first bridge arm group, the second switch module comprises a second bridge arm group, the first energy storage element comprises a motor winding, the regulation switch module is connected between a neutral point of the motor winding and a connection point between an upper bridge arm and a lower bridge arm of any phase bridge arm in the second bridge arm group, and the bridge arm in the second bridge arm group connected to the regulation switch module is a target bridge arm; wherein
the controlling the power module and the first energy storage element to form a first battery charge-discharge loop for performing charge-discharge comprises:
in a first period, controlling an upper bridge arm of any phase in the first bridge arm group to turn on, and controlling a lower bridge arm of the target bridge arm in the second bridge arm group to turn on;
in a second period, controlling the lower bridge arm of the target bridge arm to turn off; and
in a third period, controlling the turned-on upper bridge arm in the first bridge arm group to turn off, and controlling a lower bridge arm corresponding to the turned-off bridge arm to turn on ;
wherein control of the first period, the second period, and the third period is alternately performed continuously.

11. The method according to any one of claims 6 to 10, wherein the first switch module comprises the first bridge arm group, the second switch module comprises the second bridge arm group, the first energy storage element comprises the motor winding, the regulation switch module is connected between the neutral point of the motor winding and a connection point between an upper bridge arm and a lower bridge arm of any phase bridge arm in the second bridge arm group, and the bridge arm in the second bridge arm group connected to the regulation switch module is a target bridge arm; wherein
the controlling the power module and the first energy storage element to form a first battery charge-discharge loop for performing charge-discharge comprises:
in a first period, controlling a lower bridge arm of any phase in the first bridge arm group to turn on, and controlling an upper bridge arm of the target bridge arm in the second bridge arm group to turn on;
in a second period, controlling the upper bridge arm of the target bridge arm to turn off; and
in a third period, controlling the turned-on lower bridge arm in the first bridge arm group to turn off, and controlling an upper bridge arm corresponding to the turned-off bridge arm to turn on;
wherein control of the first period, the second period, and the third period is alternately performed continuously.

12. The method according to any one of claims 6 to 11, wherein the controlling the power module, the first energy storage element, and the second energy storage element to form a second battery charge-discharge loop for performing charge-discharge comprises:
controlling a corresponding number of bridge arms in the first switch module and a corresponding number of motor windings in the first energy storage element to turn on; and controlling a corresponding number of bridge arms in the second switch module and a corresponding number of motor windings in the second energy storage element to turn on; and
adjusting the power module, the first energy storage element, and the second energy storage element to form the second battery charge-discharge loop for performing charge-discharge.

13. The method according to any one of claims 6 to 12, wherein the controlling the power module, the first energy storage element, and the second energy storage element to form a second battery charge-discharge loop for performing charge-discharge comprises:
in a first period, controlling the power module to charge the first energy storage element and the second energy storage element;
in a second period, controlling the first energy storage element and the second energy storage element to perform freewheeling; and
in a third period, controlling the first energy storage element and the second energy storage element to charge the power module;
wherein control of the first period, the second period, and the third period is alternately performed continuously.

14. The method according to any one of claims 6 to 13, wherein the first switch module comprises the first bridge arm group, the second switch module comprises the second bridge arm group, the first energy storage element comprises the motor winding, the regulation switch module is connected between the neutral point of the motor winding and a connection point between an upper bridge arm and a lower bridge arm of any phase bridge arm in the second bridge arm group, and the bridge arm in the second bridge arm group connected to the regulation switch module is a target bridge arm; wherein
the controlling the power module, the first energy storage element, and the second energy storage element to form a second battery charge-discharge loop for performing charge-discharge specifically comprises:
in a first period, controlling an upper bridge arm of any phase in the first bridge arm group to turn on, and controlling a lower bridge arm of at least one phase bridge arm among remaining bridge arms excluding the target bridge arm in the second bridge arm group to turn on;
in a second period, controlling the turned-on bridge arm in the second bridge arm group to turn off; and
in a third period, controlling the turned-on upper bridge arm in the first bridge arm group to turn off, and controlling a lower bridge arm corresponding to the turned-off bridge arm to turn on;
wherein control of the first period, the second period, and the third period is alternately performed continuously.

15. The method according to any one of claims 6 to 13, wherein the first switch module comprises the first bridge arm group, the second switch module comprises the second bridge arm group, the first energy storage element comprises the motor winding, the regulation switch module is connected between the neutral point of the motor winding and a connection point between an upper bridge arm and a lower bridge arm of any phase bridge arm in the second bridge arm group, and the bridge arm in the second bridge arm group connected to the regulation switch module is a target bridge arm; wherein
the controlling the power module, the first energy storage element, and the second energy storage element to form a second battery charge-discharge loop for performing charge-discharge comprises:
in a first period, controlling a lower bridge arm of any phase in the first bridge arm group to turn on, and controlling an upper bridge arm of at least one phase bridge arm among remaining bridge arms excluding the target bridge arm in the second bridge arm group to turn on;
in a second period, controlling the turned-on bridge arm in the second bridge arm group to turn off; and
in a third period, controlling the turned-on lower bridge arm in the first bridge arm group to turn off, and controlling an upper bridge arm corresponding to the turned-off bridge arm to turn on;
wherein control of the first period, the second period, and the third period is alternately performed continuously.

16. The method according to any one of claims 6 to 13, wherein the controlling the power module, the first energy storage element, and the second energy storage element to form a second battery charge-discharge loop for performing charge-discharge comprises:
in a first period, controlling the power module to charge the first energy storage element;
in a second period, controlling the first energy storage element and the second energy storage element to perform freewheeling; and
in a third period, controlling the first energy storage element and the second energy storage element to charge the power module;
wherein control of the first period, the second period, and the third period is alternately performed continuously.

17. The method according to claim 16, wherein the first switch module comprises the first bridge arm group, the second switch module comprises the second bridge arm group, the first energy storage element comprises the motor winding, the regulation switch module is connected between the neutral point of the motor winding and a connection point between an upper bridge arm and a lower bridge arm of any phase bridge arm in the second bridge arm group, and the bridge arm in the second bridge arm group connected to the regulation switch module is a target bridge arm; wherein
the controlling the power module, the first energy storage element, and the second energy storage element to form a second battery charge-discharge loop for performing charge-discharge comprises:
in a first period, controlling an upper bridge arm of any phase in the first bridge arm group to turn on, and controlling a lower bridge arm of the target bridge arm in the second bridge arm group to turn on;
in a second period, controlling the lower bridge arm of the target bridge arm to turn off, and controlling an upper bridge arm of at least one phase among bridge arms excluding the target bridge arm in the second bridge arm group to turn on; and
in a third period, controlling the turned-on upper bridge arm in the first bridge arm group to turn off, and controlling a lower bridge arm corresponding to the turned-off bridge arm to turn on;
wherein control of the first period, the second period, and the third period is alternately performed continuously.

18. The method according to claim 16 or 17, wherein the first switch module comprises the first bridge arm group, the second switch module comprises the second bridge arm group, the first energy storage element comprises the motor winding, the regulation switch module is connected between the neutral point of the motor winding and a connection point between an upper bridge arm and a lower bridge arm of any phase bridge arm in the second bridge arm group, and the bridge arm in the second bridge arm group connected to the regulation switch module is a target bridge arm; wherein
the controlling the power module, the first energy storage element, and the second energy storage element to form a second battery charge-discharge loop for performing charge-discharge comprises:
in a first period, controlling a lower bridge arm of any phase in the first bridge arm group to turn on, and controlling an upper bridge arm of the target bridge arm in the second bridge arm group to turn on;
in a second period, controlling the upper bridge arm of the target bridge arm to turn off, and controlling a lower bridge arm of at least one phase among bridge arms excluding the target bridge arm in the second bridge arm group to turn on; and
in a third period, controlling the turned-on lower bridge arm in the first bridge arm group to turn off, and controlling an upper bridge arm corresponding to the turned-off bridge arm to turn on;
wherein control of the first period, the second period, and the third period is alternately performed continuously.

19. A computing device, comprising:
a memory configured to store executable instructions; and
a processor configured to connect to the memory to execute the executable instructions to perform the charge-discharge method according to any one of claims 5 to 18.

20. A computer-readable storage medium, having a computer program stored thereon; wherein the computer program is executed by a processor to implement the method according to any one of claims 5 to 18.
